# EUROPEAN PATENT APPLICATION

(11) **EP 2 520 601 A1**
(43) Date of publication of application: **07.11.2012**
(21) Application number: 11164974.5
(22) Date of filing: 05.05.2011
(51) Int. Cl.: C08G 63/78

(54) **Process for producing polyesters**

(71) Applicant: Cytec Surface Specialties, S.A., 1070 Brussels (BE)
(72) Inventor: Moens, Luc, 1640 Sint-Genesius-Rode (BE)
(74) Representative: Schoofs, Hilde

(57) **Abstract**

A process is disclosed wherein at least two members of a wide range of polymeric polyesters useful in the preparation of powder coating compositions may be produced in two process steps using a common prepolymer intermediate. The intermediate is produced in the first step, using a stoichiometric excess of neopentyl glycol, in an esterification reaction with terephthalic acid and/or in a trans-esterification reaction with di-alkyl terephthalate. Different polyester resins may then be produced from this common intermediate in the second step, by tailoring the reaction recipe thereof to the desired final product qualities.

## Description

### FIELD OF THE INVENTION

The current invention relates to the production of polymeric polyesters, which may also be called polyester resins, useful in the preparation of powder coating compositions. More in particular, the invention provides an improved process for the production of a range of primarily neopentyl glycol and terephthalic acid based polyesters which contain carboxyl and/or hydroxyl group functionality, and of powder coatings and coated articles comprising the polyesters, either as such or in the form of a further modified derivative.

### BACKGROUND OF THE INVENTION

Powder coating compositions for use in painting have become increasingly popular because they greatly reduce and may even eliminate the organic solvents which are typically used in liquid paints. Such powder coating compositions may contain as binder one or more carboxyl group containing polymer resins, or one or more hydroxyl group containing polymer resins, together with a hardener suitably selected for the particular type of resin in order to achieve the curing of the coating. Carboxyl group containing polymer resins, such as carboxyl group containing polyester resins, may for instance be combined for that purpose with epoxy compounds, such as triglycidyl isocyanurate, glycidyl group containing acrylic copolymers or β-hydroxyalkylamides. Hydroxyl group containing polymer resins, typically hydroxyl group containing polyester resins, may be combined for that purpose with blocked or non- blocked isocyanates, melamine resins, and the like.

Powder coating compositions may also be based on (meth)acryloyl group containing polymer resins, such as (meth)acryloyl group containing polyester resins or polyacrylates. Final curing of the latter family of resins usually involves free radical polymerization, typically UV-radiation initiated, in order to achieve their final properties. By (meth)acryloyl groups as used herein is meant to designate both acryloyl groups and methacryloyl groups, as well as mixtures thereof.

Carboxyl, hydroxyl or (meth)acryloyl group containing polyester resins are suitable for use in the preparation of powdered varnishes and paints. Over time, a wide variety of such resin types has been developed, most of these resins being tailored to one or more particular powder coating application, usually in order to improve at least one property of the powder coating.

These polyesters are usually prepared from on the one hand mainly aromatic polycarboxylic acids or anhydrides, and optionally a minor proportion of aliphatic or cycloaliphatic polycarboxylic acids or anhydrides, and on the other hand various polyols. Instead of esterifying these acids or anhydrides with the polyols, esters of these acids may be used in a transesterification reaction with the polyols. Alkyl esters of these acids, and in particular their methyl esters, may be particularly suitable for such transesterification reaction.

Neopentyl glycol is often used as the prime polyol ingredient of these polyester resins. Isophthalic acid and in particular terephthalic acid are popular as prime polyacid ingredients. The properties of the resin are further modified by including other particular polyols and/or polyacids in minor and selected amounts as secondary ingredients into the cocktail used for forming the polyester resin.

Terephthalic acid represents a particular problem in the preparation of its polyester resin derivative, because of the low solubility of the free acid in the polyol. During the reaction, the free terephthalic acid reactant remains present as a solid, typically finely dispersed in the reaction mixture containing any remaining free polyol reactant and the already formed polyester. The reaction product thus only reaches its desired transparent state when it has become substantially free of unreacted terephthalic acid.

Therefore, polyesters which are primarily made from terephthalic acid and neopentyl glycol are typically produced using a two step process, in particular when the final polyester resin should have primarily remaining carboxyl functionality. The first step in this process typically consists of the synthesis of a hydroxyl functional prepolymer, using a stoichiometric excess of polyols relative to the cocktail of polyacids used. The molecular weight of the prepolymer is thereby typically kept in the range of 1000 to 6000 (i.e. somewhat lower than this of the final polyester resin). This hydroxyl functional prepolymer is then further reacted in a second step with in particular more polyacid and/or anhydrides, in a cocktail suited to achieve the desired properties of the polyester resin, and which may optionally result in a polyester resin having more remaining carboxyl than hydroxyl functionality. Such two step processes are for instance described in GB 1381262, US 4,085,159 and EP 0110451.

The characteristics of the polyester resin product from the second step are affected by the ingredients and conditions used in each of the two process steps. Tight process control is therefore applied in both process steps. Important parameters for monitoring reaction progress and product composition are the transparency, the viscosity, the acid number and the hydroxyl number of the reaction mixture. Acid number and hydroxyl number are typically determined using wet chemistry methods. In particular the hydroxyl number determination is rather time consuming. The acid number and the hydroxyl number continue to reduce as the reaction proceeds towards completion and as molecular weight increases, but their desired absolute and relative values depend on the product being targeted and on the cocktail of ingredients being used in the reaction recipe.

The first step of such a two step process consumes by far the major amount of the monomers, and therefore also produces a significant amount of byproduct, i.e. water from esterification and/or alkanol from transesterification. This byproduct is preferably removed from the reaction mixture, in order to move the reaction equilibrium towards the product side. A reactor for use in the first process step is therefore typically equipped with an overhead system, for condensing the reactor vapours, for separating the byproduct from any monomers which are entrained with the reactor vapours, typically by distillation/fractionation, and for recycling as much as possible of the thus recovered monomers to the reactor without having to recycle much of the reaction byproduct. This overhead system adds significant further complexity to the first step of the process, in particular because the conditions and compositions in the reactor overhead system are affected by the composition of the reaction mixture, and hence by the ingredients used in the reaction and by the reaction, the fractionation and the reflux conditions. In a batch process, the reaction mixture also continuously changes composition, and the reaction conditions such as temperature may also intentionally be changed, which adds further complexity to the process controls, in particular of the overhead system.

The amount of monomers added in the second process step is typically much smaller as compared to the first process step. The second process step in many instances thus only produces small amounts of byproduct, if any, and the second step reactor is therefore usually not equipped with such overhead system. Monitoring and controlling the second process step is therefore relatively easy compared to the monitoring and control of the first process step.

In particular a tight control of the conversion in the first step of a two step process is difficult, but may be desirable for reasons of process efficiency or product quality. Such control requires the determination of the hydroxyl number of the reaction mixture. This analytical result only becomes available after a particularly time consuming analytical procedure, while in the mean time the reaction has progressed further at a rate which depends on, and differs with, the reaction mixture composition, and thus may be strongly recipe dependent.

There remains therefore a need for a two step process for the production of a polyester resin which is easier to control and optimise. It is thereby important that the overall process remains capable of producing the wide variety of polyester resin grades required for satisfying the product quality requirements of the many different product end-uses.

The present invention aims to obviate or at least mitigate the above described problem and/or to provide improvements generally.

### SUMMARY OF THE INVENTION

According to the invention, there is provided an improved process for the two-step production of polyester resins suitable for use in powder coating applications, of powder coatings and of articles coated with a coating containing such resin, as defined in any of the accompanying claims.

A process for producing at least two different polyesters from a common prepolymer, comprising the steps of
(a) forming an amount of prepolymer by reacting a stoichiometric excess of at least one polyol monomer, wherein neopentyl glycol represents at least 80% wt of the total polyol monomer, in at least one reaction selected from the group consisting of (a1) an esterification reaction with at least one polyacid monomer, wherein terephthalic acid represents at least 80% wt of the total polyacid monomer and (a2) a transesterification reaction with at least one alkyl ester monomer of a polyacid, wherein di-alkyl terephthalate represents at least 80% wt of the total alkyl ester monomer,
(b) taking a portion of the prepolymer formed in step (a) to form a first polyester from said prepolymer and from one or more "modifying polyacids" and/or polyols, using a first recipe, and
(c) taking at least once a second portion of the prepolymer formed in step (a) to form a second polyester from said prepolymer and from one or more "modifying polyacids" and/or polyols, using a second recipe,
whereby the second recipe differs from the first recipe by the selection of at least one different "modifying polyacid" and/or polyol, and/or by using the same "modifying polyacids" and/or polyols in amounts which differ between the two recipes at least for 1% relative for at least one monomer. Instead of a modifying polyacid also its functional equivalents like a corresponding polyanhydride and/or alkyl ester monomer (typically a methyl ester) can be used in steps (b) and/or (c) (and possibly step (d) - see infra). The term "modifying polyacid" as used herein covers each of these, id est polyacids, polyanhydrides and/or alkylesters of the polyacid.

The applicants have found that a wide variety of ultimate product qualities may be obtained from the same prepolymer intermediate. Without being bound by theory, the applicants believe that this is made possible by an intensive and random interesterification occurring during the reaction in the second process step. The applicants have found that it may therefore in most instances suffice to introduce any "modifying polyacids" and/or modifying polyols in the second process step, in order to produce the polyester resin product with the desired properties of the target product grade.

The applicants have found that, even for a multiproduct unit producing a wide variety of polyester resins, it is thus sufficient to produce in the first step a polyester prepolymer primarily of neopentyl glycol and terephthalic acid, possibly even without any significant further presence of other acids and/or alcohols. This prepolymer is preferably made using a stoichiometric excess of the polyol, such that the terephthalic acid or its alkyl ester may substantially all be reacted away down to a low acid number, and this step thus results in a prepolymer having primarily remaining hydroxyl functionality, more preferably being transparent to the naked eye, indicating that the reaction mixture is substantially free of unreacted terephthalic acid. The reaction product resulting from esterification is therefore typically characterised by a hydroxyl number which is higher than its acid number.

The applicants have found in particular, when operating the first process step always with the same recipe, that this first process step becomes much easier to control. The reactor overhead system becomes much more stable, the reflux composition is more constant, and the reaction kinetics may become much more predictable. Because of the improved controllability and predictability, also the monitoring intensity may be reduced. The evolution over time of the operating conditions, the acid number and/or the hydroxyl number of the reaction mixture becomes much easier to predict. It becomes therefore easier to predict when a target reaction mixture and prepolymer composition is expected to be achieved and/or when the reaction mixture is expected to have become transparent, and thus when the reaction may desirably be stopped. It also becomes easier to obtain always the same prepolymer quality, such that also the second process step becomes more stable and easier to control.

Another advantage is that the delay caused by the time required to analyse a sample of the reaction mixture for its hydroxyl number becomes less critical. The hydroxyl number, together with the acid number, is often used as a measure of the average molecular weight of the prepolymer, and is thus a parameter of prime importance. Being able to predict its rate of change creates the possibility to predict the reaction time required for achieving the target conversion and product composition, avoiding the need to first confirm this result by a hydroxyl number analysis. On-line analysis of acid number, hydroxyl number and viscosity (η), using for instance near-infrared (NIR), easily can be implemented in the process of the invention.

This brings a significant process advantage to the first process step. If this step operates in continuous mode, throughput and conditions may be set such that prepolymer quality stays constant and on target. This allows operating closer to target, and hence at a higher throughput rate. When the reaction is operated in batch, the required residence time for a given product target may be made predictable, the reactor may be emptied without needing analytical confirmation of its content, and the subsequent batch may be started sooner. This thus also allows increasing the overall production rate. In either mode, the present invention thus brings increased capacity to existing reactor equipment.

The applicants have further found, by postponing the introduction of any of the modifying polyols and/or "modifying polyacids" to the second process step, that the colour of the final resins obtained from the process of the invention is typically much improved. Without being bound by theory, the applicants believe that this is because the modifying polyols and "modifying polyacids" are generally more susceptible to colour formation, and that it is beneficial to reduce their exposure to the reaction conditions and/or the catalysts used in the process.

### DETAILED DESCRIPTION OF THE INVENTION

In the process of the present invention, the stoichiometric excess in step (a) is defined as the ratio of the amount of free alcohol functions relative to the sum of the free acid and the ester functions present in the starting reaction mixture, the functions being expressed as equivalents. We prefer that this stoichiometric ratio is in the range of 100.2% to 150.0%, often it is at least 100.5%, preferably at least 101.1%, more preferably at least 102.2%, even more preferably at least 104.3%, yet more preferably at least 106.5% and very often at least 110.0%. Often this stoichiometric ratio is at most 130.0%, quite often at most 126.5% and very often at most 122.0%; preferably it is at most 120.0%, quite often at most 118.0% and very often at most 116.0%; yet more preferably it is at most 114.0%, even more preferably at most 112.0% and most preferably it is about 111.0%. The applicants have found that with the stoichiometric excess as specified, a very wide range of final polymeric polyesters may be produced from the same prepolymer intermediate.

In step (a) of the process according to the present invention, neopentyl glycol typically represents at least 90% by weight of the polyol monomer present in the starting reaction mixture, often at least 95%, preferably at least 96%, more preferably at least 97%, yet more preferably at least 98%, even more preferably at least 99%, most preferably at least 99.5% and very often at least 99.9% by weight of the polyol monomer present in the starting reaction mixture. The applicants have found that the higher presence of neopentyl glycol brings a higher predictability of the reaction kinetics, and all the associated advantages described above. The applicants have also found that this feature brings the advantage of a better colour for the final product, as already explained above.

When the starting reaction mixture in step (a) contains a polyacid monomer, such as in esterification reaction (a1), the applicants prefer that terephthalic acid represents at least 90% by weight of the polyacid monomer present in the starting reaction mixture, often at least 95%, preferably at least 96%, more preferably at least 97%, yet more preferably at least 98%, even more preferably at least 99%, most preferably at least 99.5% and very often at least 99.9% by weight of the polyacid monomer present in the starting reaction mixture. The applicants have found that the higher presence of terephthalic acid in the reaction mixture brings a higher predictability of the reaction kinetics, and all the associated advantages which have been described above. The applicants have also found that this feature brings the advantage of a better colour for the final product, as already explained above.

When the starting reaction mixture in step (a) contains a an alkyl ester monomer of a polyacid, such as in transesterification reaction (a2), the applicants prefer that di-alkyl terephthalate represents at least 90% by weight of the polyacid alkyl ester monomer present in the starting reaction mixture, often at least 95%, preferably at least 96%, more preferably at least 97%, yet more preferably at least 98%, even more preferably at least 99%, most preferably at least 99.5% and very often at least 99.9% by weight of the polyacid alkyl ester monomer present in the starting reaction mixture. The applicants have found that the higher presence of di-alkyl terephthalate in the reaction mixture brings a higher predictability of the reaction kinetics, and all the associated advantages which have been described above. The applicants have also found that this feature brings the advantage of a better colour for the final product, as already explained above.

The applicants have found that when starting from the same prepolymer obtained from step (a), small differences in the operating recipes applied in steps (b) and (c) are leading to derivative polyester products which are different. This is readily understood for recipes in which the selection of "modifying polyacids" and/or polyols is different, in particular when the difference concerns monomers containing more than two functions, and which therefore are able to introduce branching into the final molecule. The applicants have however found that also different products may be produced from the same reactants, but when used in different amounts.

The first and the second recipe in the process of the present invention may therefore also differ by using the same modifying polyols and/or "modifying polyacids" in amounts which differ between the two recipes at least for 1% relative for at least one monomer, quite often at least for 2% and very often at least for 3% relative for at least one monomer; preferably at least for 4%, quite often at least for 5% and very often at least for 6% relative for at least one monomer; more preferably at least for 7%, quite often at least for 8% and very often at least for 9% relative for at least one monomer; even more preferably at least for 10% relative for at least one of the monomers specified in the recipes.

In the process according to the present invention, step (b) may be repeated at least once, possibly two times, if desired three times, and optionally four or more times for producing subsequent amounts of the first polyester. Likewise, step (c) may be repeated at least once, possibly two times, if desired three times, and optionally four or more times for producing subsequent amounts of the second polyester.

The process of the present invention may further comprise the step of
(d) taking at least once a third portion of the prepolymer formed in step (a) to form a third polyester from the prepolymer and from one or more "modifying polyacids" and/or polyols, using a third recipe, whereby the third recipe differs from the first and the second recipe by the selection of at least one different "modifying polyacid" and/or polyol, and/or by using the same "modifying polyacids" and/or polyols in amounts which differ between the recipes at least for 1% relative for at least one monomer (see above for more preferred differences in amounts).

Also this step (d) of the process may be repeated at least once, possibly two times, if desired three times, and optionally four or more times for producing subsequent amounts of the third polyester.

In the process according to the present invention, the prepolymer is preferably characterized by at least one, and possibly by all of the following characteristics:
(i) a hydroxyl number in the range of 20 to 120 mg KOH/g, preferably at least 30 mg KOH/g, more preferably at least 40 mg KOH/g, even more preferably at least 45 mg KOH/g, optionally at most 110 mg KOH/g, often at most 100 mg KOH/g, preferably at most 90 mg KOH/g, more preferably at most 80 mg KOH/g, even more preferably at most 70 mg KOH/g, yet more preferably at most 60 mg KOH/g, most preferably at most 55 mg KOH/g, most typically about 50 mg KOH/g.,
(ii) an acid number which is at least 1 mg KOH/g below its hydroxyl number, typically at least 2 mg KOH/g, often at least 3 mg KOH/g, quite often at least 4 mg KOH/g, very often at least 5 mg KOH/g, preferably at least 10 mg KOH/g, more preferably at least 20 mg KOH/g; yet more preferably at least 30 mg KOH/g, still more preferably at least 40 mg KOH/g, most preferably at least 45 mg KOH/g below its hydroxyl number.
(iii) to the naked eye transparent, i.e. containing at most 3% by weight of unreacted terephthalic acid, preferably at most 1% and more preferably at most 0.5% by weight of unreacted terephthalic acid, based on the total weight of the prepolymer,
(iv) containing at most 3% by weight of unreacted dialkyl terephthalate monomer, preferably at most 1% and more preferably at most 0.5% by weight of unreacted dialkyl terephthalate monomer, based on the total weight of the prepolymer,
(v) a number average molecular weight Mn, as determined by Gel Permeation Chromatography (GPC), in the range of 800 to 6000, preferably at least 1000, more preferably at least 1400, and optionally at most 3500, preferably at most 2800,
(vi) a glass transition temperature Tg measured by Differential Scanning Chromatography (DSC) using a temperature gradient of 20 degrees C per minute, in the range of 30-80°C, preferably at least 40°C, more preferably at least 45°C, and optionally at most 70°C, preferably at most 60°C,
(vii) a Brookfield cone-plate viscosity at 200°C in the range of 5-15000 mPa.s, preferably at least 10 mPa.s, more preferably at least 50 mPa.s, even more preferably at least 100 mPa.s, yet more preferably at least 150 mPa.s, and optionally at most 12000 mPa.s, preferably at most 10000 mPa.s, more preferably at most 8000 mPa.s, and even more preferably at most 5000 mPa.s.

The overall process according to the present invention becomes easier to operate and control if the polyester prepolymer from the first step has a well defined and constant composition. The first process step may then be operated more smoothly, with less variations and using less monitoring, though closer to target and thus at a further increased throughput. The applicants have found that with a prepolymer having the characteristics as specified, it remains feasible to produce the desired wide variety of ultimate product grades. Another advantage is that the second process step, wherein the prepolymer is further reacted with the "modifying polyacids" and/or polyols, becomes also easier to operate because of the more constant and better known quality of the prepolymer intermediate.

The prepolymer in the process according to the present invention preferably is a linear polyester. This means that the polymer structure is substantially free from branching units. Such a linear polyester is obtained when generally only difunctional monomers are used for its preparation. Typically the amount of difunctional monomers relative to the total amount of monomers used is at least 99% by weight, preferably at least 99.5% by weight, most preferably at least 99.9% by weight.

In the context of the present invention, a modifying polyol is defined as a polyol which is added into the recipe in an amount which is less than the amount of neopentyl glycol used in the first process step. When neopentyl glycol is added into the second process step, this neopentyl glycol is also considered as being a modifying polyol. The modifying polyol in the process according to the present invention is preferably selected from the group consisting of neopentyl glycol, ethylene glycol, diethylene glycol, polyethylene glycol, propylene glycol or 1,2-propanediol, 1,3-propanediol, 1,4-butanediol, 2,3-butanediol, 1,6-hexanediol, 1,4-cyclohexanediol, 1,4-cyclohexane-dimethanol, 2-methyl-1,3-propanediol, 2-ethyl-2-butyl-1,3-propanediol, 1-ethyl-2-methyl-1,3-propanediol, 2-ethyl-2-methyl-1,3-propanediol, hydrogenated bisphenol A, hydroxypivalate of neopentyl glycol, dianhydrohexitol, dimer diols, such as Speziol 1075, glycerol, sorbitol, trimethylolpropane (TMP), ditrimethylolpropane, pentaerythritol, ethoxylated and/or propoxylated derivatives of any of these polyols, and mixtures thereof. Particularly preferred are ethylene glycol, diethylene glycol, 1,4-cyclohexane-dimethanol and/or TMP.

In the context of the present invention, a modifying polyacid is defined as a polyacid (or its functional equivalent) which is added into the recipe in an amount which is less than the amount of terephthalic acid and/or di-alkylterephthalate used in the first process step. When terephthalic acid and/or di-alkylterephthalate is added into the second process step, this terephthalic acid and/or di-alkylterephthalate is also considered as being a "modifying polyacid". In the process according to the present invention the "modifying polyacid" may be selected from the group consisting of isophthalic acid, terephthalic acid, phthalic acid, tetrahydrophthalic acid, 1,2-cyclohexanedicarboxylic acid, 1,3-cyclohexanedicarboxylic acid, 1,4-cyclohexanedicarboxylic acid, succinic acid, adipic acid, glutaric acid, pimelic acid, suberic acid, azelaic acid, sebacic acid, 1,12-dodecanedioic acid, dimer diacids produced by the dimerisation of fatty acids, such as Empol 1018, Pripol 1013, trimellitic acid, pyromellitic acid, the corresponding anhydrides of any of these polyacids, the alkylester (like di-alkyl terephthalate) of any of these polyacids, and mixtures thereof. Particularly preferred are adipic acid, isophthalic acid, trimellitic acid, and/or trimellitic anhydride.

In an embodiment of the process according to the present invention, at least one of the steps (a), (b) and (c) is performed at a temperature in the range of 150°C to 270°C, often at least 175°C, more often at least 200°C, preferably at least 220°C, more preferably at least 230°C, yet more preferably at least 240°C or even 245°C, and optionally at most 260°C, preferably at most 255°C, typically about 250°C. We prefer to operate the reaction steps at the temperatures as specified, as this increases reaction rates and, particularly in the first process step producing the prepolymer, increases the rate at which the reaction byproduct is evaporated from the reaction mixture, thus pushing the reaction equilibrium into the desired direction. We have also found that the specified temperatures which are below 200°C are more suitable for reaction steps in which acid anhydrides are present. Acid anhydrides typically are more reactive than the corresponding acids, and the reaction involving at least one anhydride was found to be easier to control if operated at one of the specified temperatures of at most 200°C.

In an(other) embodiment of the process according to the present invention, step (a) is performed in continuous mode. This brings the advantage of improved controllability of the prepolymer quality, while typically requiring less process monitoring efforts.

In the continuous process according to the present invention, step (a) is preferably performed in a series or cascade of at least 2, preferably 3 reactors in series. Preferably the reactors are continuous stirred tank reactors (CSTR). The reactions in step (a) generate water and/or alkanol as byproduct. It is advantageous for moving the reaction equilibrium towards the polyester product side to remove this byproduct. This is preferably removed by vaporisation. The conditions for vaporising the byproduct may also cause some of the reaction monomers to vaporise. Typically the vapours of at least one of the reactors participating in step (a) are collected and the water byproduct from the esterification or the alkanol byproduct from the transesterification is being condensed, optionally together with any of the reaction monomers. We prefer to collect the vapours from several reactors participating in step (a) together, and most preferably the vapours from all the reactors participating in step (a). Preferably the reaction byproduct is being separated from any entrained reactants, and more preferably the reactants are recycled to at least one of the reactors operating in step (a). Preferably the process is operated in such a manner that the separation of the monomers from the water byproduct, typically by distillation, leads to a very low level of monomers in the water byproduct, such that losses of monomer, in particular of neopentyl glycol, in this process water, which is typically discarded, are negligibly small. This brings the advantage that the overall raw material use is increased, and that any cleanup efforts, required for allowing the discard of the water byproduct, are reduced.

In another embodiment of the process according to the present invention, step (b) and/or step (c) is performed in batch mode. A batch mode operation is more suitable for process steps having a more complex recipe, or for performing different process steps in the same equipment, such as when different products are made in the same process equipment.

In an embodiment of the process according to the present invention, step (c) is performed subsequent to step (b) in the same process equipment. This reduces the equipment requirements for a multigrade plant, as compared to having equipment which is dedicated to each of the products in a multiproduct portfolio.

It is a still further object of the present invention to provide a continuous process for the preparation of the common hydroxyl functional prepolymer, which then, in (a) separate stage(s) is further reacted until the desired final polyester is obtained.

Polyester syntheses obtained from a semi-continuous or continuous process already are disclosed in for example US 3,884,850, US 3,257,335 and US 2008/0182963, all related to the production of polyethylene terephthalate, but which are suitable for the production of the prepolymer according to the present invention.

In accordance with the aforementioned continuous process for the preparation of the hydroxyl functional prepolymer, the condensation of terephthalic acid and neopentyl glycol may be carried out conveniently in one, two, three or more reaction tanks of conventional design which have conventional agitation means and which are connected in series. The reaction tanks are preferably equipped with means for the fractional distillation of water. The first reaction tank may continuously be fed, from a stirred tank standing at a temperature of from about 50°C to 120°C, preferably at about 100°C, with a slurry comprising the desired ratio of terephthalic acid and neopentyl glycol, corresponding to the target hydroxyl number of the common first step hydroxyl-functional prepolymer, along with an esterification catalyst such as n-butyltin trioctoate or tetra-n-butyltitanate. The contents of the stirred tank preferably are kept under a nitrogen atmosphere. Water optionally may be added to the slurry in order to adjust its viscosity so that it easily can be fed, using conventional pumping means, from the stirred tank to the first reaction tank, which preferably already is comprising at least 10% of its total volume of substantially transparent prepolymer, standing at a temperature of from 230 to 270°C and preferably at about 250°C.

A holding or surge tank may be connected to the final reaction tank. Dependent of the feed rate and the theoretical hydroxyl number of the common first step hydroxyl-functional prepolymer, as well as of the condensation temperature in the reaction tank(s), the holding or surge tank may be connected either to the first, or to the second or to a further reaction tank if present. This tank, which, if desired, may be equipped with agitation means, serves to collect and hold molten prepolymer for feed to separate reactors, which may be connected in parallel, where differentiation to final polyester resins is obtained through further condensation optionally with different amounts and/or types of polyacids and/or polyols and/or through the addition of a variety of additives. The contents of the holding or surge tank are preferably kept under a nitrogen atmosphere. For these separate reactors, equipped with conventional agitation means, fractional distillation means may optionally be omitted.

According to the invention the slurry may be added to the transparent "prepolymer" in such a way that the temperature in the reactor is unaffected, for instance at a sufficiently slow rate that the reactor heating succeeds in maintaining a constant temperature of the mixture.

When the first reaction tank is filled for about 80 to 90% of its volume, it may be emptied in such a way that the amount of partially condensed prepolymer taken out of the reaction tank equals the amount of slurry, minus water, which was fed to the reaction tank.

For the case that the prepolymer in the first reaction tank remains continuously transparent, such as when the slurry may be converted very quickly into desired prepolymer, the first reactor tank may be emptied in the holding or surge tank.

For the case that the prepolymer in the first reaction tank is turbid, i.e. when the slurry is not completely and readily converted into prepolymer and free terephthalic acid still is present, the first reactor tank may be emptied in the second reaction tank standing at 230 to 270°C, where condensation may be continued.

Once the second reaction tank has been filled for about 80 to 90 % of its volume, dependent of its degree of condensation, the prepolymer may be fed either to the holding tank or to further reaction tank(s) for further condensation, such as until the mixture becomes transparent.

The prepolymer may be removed from each reaction tank in such a way that prepolymer output amount equals the slurry or prepolymer input amount.

From the holding tank, the sufficiently condensed and transparent hydroxyl functional prepolymer then may be fed to one or more reactors, connected in parallel and optionally in series, where it serves as a raw material generally along with minor amounts of modifying polyols and/or polyacids, for further reaction, typically first at atmospheric pressure and later optionally at reduced pressure until the final polyester resin with the desired number averaged molecular weight, hydroxyl number, carboxyl number, melt viscosity, etc. has been obtained.

A variant of the process of the present invention consists in adding an amount of slurry to a first reaction tank, equipped with conventional agitation and fractional distillation means, containing between 60 and 90 % of its volume, of the corresponding transparent prepolymer, standing at a temperature of from 230 to 270°C and preferably at about 250°C. The amount of slurry added may then be equal to from 5 to 50% volume of the prepolymer already present in the first reaction tank.

Once the reactor content turns into transparency again, the reaction tank may be emptied down to its original state of filling and again fresh slurry may be added.

The transparent prepolymer thus obtained may be fed to a separate reactor equipped with conventional agitation and vacuum means where the reaction may be continued, once sufficient prepolymer is present, optionally in the presence of minor amounts of modifying polyols and/or polyacids, typically first at atmospheric pressure and later optionally at reduced pressure until the desired final polyester resin characteristics (e.g. acid number, hydroxyl number, number averaged molecular weight, melt viscosity, etc.) are obtained. If required, possible corrections in the added polyols and/or polyacids may be introduced, such as before or during the vacuum step.

Preferably the first reactor is connected to a stirred holding tank from where the prepolymer, when sufficiently present therein, then is fed to the second reactor for further reaction.

The esterification reactions in the process of the present invention are preferably catalysed, preferably acid catalysed. The acid reactant may itself act as a catalyst for the reaction, but we prefer to add a further catalyst in order to increase the reaction rate, in particular when the reaction approaches completion and the amount of remaining acid reactant has been reduced. Any suitable esterification catalyst may be used for the polycondensation reaction, such as dibutyltin oxide, dibutyltin dilaurate, n-butyltin trioctoate, titanium tetra-isopropylate, titanium tetra-n-butanoate, titanate (2-)dihydroxy bis(2-hydropropanato(2-)O1,O2) lactic acid titanate chelate, sulfuric acid or a sulphonic acid, such as paratoluene sulphonic acid. The catalyst may be used in an amount from 0.05 to 1.50% wt, based on the total reaction mixture, preferably at least 0.10% wt, more preferably at least 0.15% wt, and optionally at most 1.00% wt, preferably at most 0.50%wt and more preferably at most 0.25% wt, based on the total reaction mixture.

In an embodiment, the process according to the present invention uses in at least one of the steps (a), (b) and (c) and the optional step (d) a tin-based catalyst, preferably in a concentration in the range of 0.15 to 0.25 wt% in the reaction mixture, optionally with Sn metal in a concentration in the range of 50-1000 ppm wt, preferably at least 100 ppm wt, more preferably at least 200 ppm wt, and optionally at most 500 ppm wt. We prefer to use a tin catalyst as compared to a titanium catalyst, because the titanium catalysts tend to be more water sensitive, and water is the byproduct of the esterification reaction. The organometallic catalysts among the catalysts listed bring the advantage of a higher selectivity, leading to less formation of undesired byproducts.

In an embodiment of the process according to the present invention at least one of the first and the second, and if present the third (or further), polyester products is a hydroxyl functional polyester characterized by at least one, and possibly by all of the following characteristics:
(i) a hydroxyl number in the range of 10 to 150 mg KOH/g, preferably at least 20 mg KOH/g, and optionally at most 120 mg KOH/g, preferably at most 100 mg KO/g,
(ii) an acid number which is at least 1 mg KOH/g below its hydroxyl number, typically at least 2 mg KOH/g, often at least 3 mg KOH/g, quite often at least 4 mg KOH/g, very often at least 5 mg KOH/g, preferably at least 10 mg KOH/g, more preferably at least 20 mg KOH/g, yet more preferably at least 30 mg KOH/g, even more preferably at least 40 mg KOH/g, still more preferably at least 45 mg KOH/g below its hydroxyl number; preferably the acid number being in the range of 0.5-140 mg KOH/g, preferably at least 1 mg KOH/g, optionally at most 100 mg KOH/g, and most preferably at most 10% of the hydroxyl number,
(iii) a number average molecular weight Mn, as determined by Gel Permeation Chromatography (GPC), in the range of 1000 to 15000, preferably at least 1500 and optionally at most 8500,
(iv) a glass transition temperature Tg measured by Differential Scanning Chromatography (DSC) using a temperature gradient of 20 degrees C per minute, in the range of 40-90°C, preferably at least 45°C, more preferably at least 50°C, even more preferably at least 55°C, and optionally at most 90°C, preferably at most 80°C, more preferably at most 70°C, even more preferably at most 65°C,
(v) a Brookfield cone-plate viscosity at 200°C in the range of 5-15000 mPa.s, preferably at least 10 mPa.s, more preferably at least 50 mPa.s, even more preferably at least 100 mPa.s, yet more preferably at least 150 mPa.s, and optionally at most 12000 mPa.s, preferably at most 10000 mPa.s, more preferably at most 8000 mPa.s, and even more preferably at most 5000 mPa.s.

The applicants have found that, in particular when the prepolymer has a hydroxyl number in the range of 20-120 mg KOH/g, preferably about 50 mg KOH/g, the characteristics of the polyester resin from the second process step may be tailored to suit the downstream needs within a significantly wide range. For certain grades of final polyester, no branching or 3-dimensional structure needs to be introduced into the polyester at this stage, and the modifying cocktail of reagents in the second step may contain only one or more diols and if desired one or more dibasic acids. The relative amounts of additional modifying diols and/or dibasic acids may readily be determined from the desired final hydroxyl number and the hydroxyl number of the starting prepolymer, and the choice of diols and/or acids specified in the particular recipe. It may be desired to introduce branching and/or a 3-dimensional structure in the polyester molecule. This may be achieved by introducing polyols and/or polyacids having more than 2 alcohol or acid functions. The calculation must in this case also take into account the functionality of these so-called "higher order" polyols or polyacids.

In another embodiment, the process according to the present invention may produce a polyester product having primarily acid functionality. A polyester product from the second process step, having an acid number which is lower than the hydroxyl number of the prepolymer intermediate it starts from, may readily be achieved by a cocktail of suitably selected polyacids, if needed complemented with additional modifying polyols.

However, if an acid number should be targeted which is higher than the hydroxyl number of the prepolymer intermediate, such carboxyl functional polyester may preferably be obtained by introducing an anhydride of a higher order polyacid, such that ring opening occurs of the anhydride ring of the polyacid, such as when one of the acid functions condenses on the hydroxyl functional prepolymer.

In another embodiment of the process according to the present invention at least one of the first and the second, and if present the third (or further), polyester products is a carboxylic acid functional polyester characterized by at least one, and possibly by all of the following characteristics:
(i) an acid number in the range of 10 to 150 mg KOH/g, preferably at least 20 mg KOH/g, and optionally at most 120 mg KOH/g, preferably at most 100 mg KO/g,
(ii) a hydroxyl number which is at least 1 mg KOH/g below its acid number, typically at least 2 mg KOH/g, often at least 3 mg KOH/g, quite often at least 4 mg KOH/g, very often at least 5 mg KOH/g, preferably at least 10 mg KOH/g, more preferably at least 20 mg KOH/g, yet more preferably at least 30 mg KOH/g, even more preferably at least 40 mg KOH/g, still more preferably at least 45 mg KOH/g below its acid number; preferably the hydroxyl number being in the range of 0.5-140 mg KOH/g, preferably at least 1 mg KOH/g, optionally at most 100 mg KOH/g, and most preferably at most 10% of the acid number,
(iii) a number average molecular weight Mn, as determined by Gel Permeation Chromatography (GPC), in the range of 1000 to 15000, preferably at least 1500 and optionally at most 8500,
(iv) a glass transition temperature Tg measured by Differential Scanning Chromatography (DSC) using a temperature gradient of 20 degrees C per minute, in the range of 40-90°C, preferably at least 45°C, more preferably at least 50°C, even more preferably at least 55°C, and optionally at most 90°C, preferably at most 80°C, more preferably at most 70°C, even more preferably at most 65°C,
(v) a Brookfield cone-plate viscosity at 200°C in the range of 5-15000 mPa.s, preferably at least 10 mPa.s, more preferably at least 50 mPa.s, even more preferably at least 100 mPa.s, yet more preferably at least 150 mPa.s, and optionally at most 12000 mPa.s, preferably at most 10000 mPa.s, more preferably at most 8000 mPa.s, and even more preferably at most 5000 mPa.s.

From the same common precursor obtained in step (a) a first polyester product can be prepared that is hydroxyl functional and a second polyester product that is carboxyl functional, and vice versa. In another embodiment, the different polyester products prepared from the same common precursor of step (a) are all hydroxyl functional. In yet another embodiment, the different polyester products prepared from the same common precursor of step (a) are all carboxyl functional.

In the second process step, we prefer to perform the reaction under reduced pressure or vacuum. This brings the advantage that any byproduct formed is more readily removed from the reaction mixture, resulting in a more favourable reaction equilibrium, a higher reaction rate, a shorter reaction time and in batch a shorter batch time. This further improves the process productivity.

In an embodiment of the process according to the present invention, at least one of the first and the second, and if present third (or further), polyester products is further reacted to form a modified derivative. The hydroxyl or carboxyl functional polyesters prepared according to the present invention may be further converted into a (meth)acryloyl group containing polyester, through the reaction of a diisocyanate with a hydroxylalkyl(meth)acrylate and with the terminal hydroxyl groups of a hydroxyl-functional polyester, or through the reaction of a (meth)acrylic acid with the terminal hydroxyl groups of a hydroxyl-functional polyester, or through the reaction of glycidyl (meth)acrylate with the terminal carboxyl groups of a carboxyl functional polyester.

The process according to the present invention may further comprise the step of further adding to at least one of the first and the second, and if present third (or further), polyester products a suitable curing component. The curing component may be selected depending on the nature of the polyester resin product. For products having primarily hydroxyl functionality, the curing agent is preferably selected from the group consisting of blocked or non-blocked isocyanates, melamine resins and the like. For products having primarily acid functionality, the curing agent is preferably selected from the group consisting of epoxy compounds, such as triglycidyl isocyanurate, glycidyl group containing acrylic copolymers or β-hydroxyalkylamides. Curing agents preferably are added during extrusion.

Also added, at the same time as the curing agent or alternatively in a previous or in a subsequent process step, may be at least one compound selected from the list existing of an antioxidant, a tribo additive, a UV-stabiliser, a heat stabiliser, a flow agent, a dispersing agent, and mixtures thereof. The above additives typically are added during resin synthesis or while leaving the reactor. Typically they are added to the polyester products already having the desired characteristics (like acid number, hydroxyl number, number averaged molecular weight, melt viscosity, etc), yet still in the molten stage.

The composition obtained by mixing additional components with or into the polyester product according to the present invention, may be a formulation suitable for a powder coating. The formulation may optionally also include a compound selected from a photoinitiator, a filler, and a pigment, which preferably are added to the premix of the powder formulation.

The process according to the present invention may further comprise the step wherein the formulation is extruded into extrudates. These extrudates may be further ground to form a powder, preferably the powder having a number average particle size of at most 30 µm.

The process according to the present invention may further comprise the step of applying the powder to an article to form an article which is at least partially coated with the powder.

The process according to the present invention may further comprise the step of exposing the powder (depending on the type) to at least one treatment selected from heating, electromagnetic radiation (preferably UV-radiation) and electron beam irradiation, to cure the powder.

In the context of the present invention, the acid number and hydroxyl number typically are determined by titration methods well known in the art.

For determining polymer or prepolymer molecular weights, we prefer to use a gel permeation chromatography (GPC) method. Typically molecular weights are measured by GPC in a THF (tetrahydrofuran) solution, injected on a 3xPLgel 5µm Mixed-D LS 300x7.5 mm column (MW range of 162 to 377400 g/mol) calibrated with polystyrene standards at 40°C. Typically the refractive index (RI) is used as detector.

The glass transition temperature (Tg) typically is measured by Differential Scanning Chromatography (DSC) using a temperature gradient of 20 degrees C per minute in accordance with ASTM D3418.

Viscosity (Brookfield cone plate viscosity) is typically measured at 200°C in accordance with ASTM D4287-88.

Having now fully described this invention, it will be appreciated by those skilled in the art that the invention can be performed within a wide range of parameters within what is claimed, without departing from the spirit and scope of the invention. As understood by those of skill in the art, the overall invention, as defined by the claims, encompasses other preferred embodiments not specifically enumerated herein.

The following examples are submitted for a better understanding of the invention without being restricted thereto.

Example 1: Preparation of a hydroxyl functional prepolymer with a hydroxyl number of 50 mg KOH/g, accordingly a continuous process. The continuous process for the preparation of the common hydroxyl functional prepolymer is demonstrated in a laboratorium reactor set-up.

Reactor A, provided with a condenser, a stirrer and a nitrogen inlet, and contains 4000 g slurry, composed of 67.63 parts of terephthalic acid, 47.04 parts of neopentyl glycol, 5.23 parts of water and 0.2 parts of n-butyl tin trioctoate. The slurry is kept at a temperature of 100°C, while continuously stirring. The slurry, kept under nitrogen at a temperature of 100°C, appears as a yoghurtlike liquid being easily pumped.

Reactor B corresponds to a classical polycondensation reactor equipped with a stirrer, a distillation column connected to a water cooled condenser, an inlet for nitrogen and a thermocouple attached to a thermoregulator. The connection between reactor A and B is made by a "versilic silicone" chemical inert tube with a diameter of 5 mm. Reactor B contains 1500 g of a neopentyl glycol terephthatate characterized by a hydroxyl number of 50 mg KOH/g standing at 250°C while stirred under nitrogen atmosphere. The slurry then is pumped from reactor A to B by means of a peristaltic pump (Watson Marlow 101 U/R) at such a feeding speed that the bulk temperature in reactor B remains unchanged at 250°C. In this experiment it took about 5 hours for converting 3600 g of slurry into a transparent hydroxyl functional prepolymer with a hydroxyl number of 50 mg KOH/g. 70% of the Reactor B-content then is poured in a third reactor, equipped with a stirrer, a nitrogen inlet and vacuum means, together with all the eventual modifying polyacids and polyols. After 2 hours at 250°C, 0.05% of tributyl phosphate is added and vacuum is applied until the specifications for acid number, hydroxyl number and Brookfield viscosity are obtained.

The remaining 30% transparent hydroxyl functional prepolymer in Reactor B is used for repeating the experiment of Example 1 for six successive times. In the table 1, the quantities of the different eventual polyols and polyacids along with the final polyester characteristics are reproduced.

**Table 1: Examples 2 to 8**

| | Example 2 | Example 3 | Example 4 | Example 5 | Example 6 | Example 7 | Example 8 |
|---|---|---|---|---|---|---|---|
| Example 1 | 3600 | 3600 | 3600 | 3600 | 3600 | 3600 | 3600 |
| iPA | 50.76 | | 650.09 | 458.86 | 910.65 | 500.70 | 516.42 |
| AdA | 130.52 | 364.20 | 270.54 | 272.16 | | 128.40 | 372.73 |
| NPG | | 244.51 | 148.05 | 139.87 | | 100.66 | 228.61 |
| HPN | | | | | 618.86 | | |
| TMP | 54.43 | | 157.086 | 62.29 | | | 54.31 |
| TMA | | 560.96 ⁽³⁾ | | | 118.99 | | |
| -H₂O | 43.20 | 89.81 | 172.34 | 131.31 | 168.86 | 92.65 | 160.19 |
| Additive | 22.75⁽¹⁾ | 23.40 ⁽²⁾ | 16.29 ⁽²⁾ | 22.00 ⁽²⁾ | | | 9.20 ⁽²⁾ |
| AN | 4 | 73 | 47 | 30 | 32 | 32 | 33 |
| OHN | 31 | 8 | 6 | 4 | 5 | 4 | 3 |
| **η B**rookfield | 8200^{(200°C)} | 9200^{(175°C)} | 4800^{(200°C)} | 5500^{(200°C)} | 6000^{(200°C)} | 3500^{(200°C)} | 9200^{(200°C)} |

| | | | | | | | |
|---|---|---|---|---|---|---|---|
| (1) Dibutyltin dilaurate (2) Ethyl Triphenyl Phosphonium Bromide (3) TMA is added in a separate step once the condensation between the polyol of Example 1, NPG, and AdA is completed. | | | | | | | |

With:
AdA: Adipic Acid
iPA: isoPhthalic Acid
NPG: neopentyl glycol
HPN: neopentyl glycol hydroxypivalate
TMP: trimethylolpropane
TMA: trimellitic anhydride

### Powder Examples 2 to 8

The polyesters of Example 2 to 8 then are formulated in the white Powder Examples 2 to 8 respectively, consisting of 70 % weight of binder and 30% weight of Ti02 (Kronos 2310).

The binder of Powder Example 2 consists of 88% weight of the polyester of Example 2 and 12 % weight of Vestagon B1530, an ε- caprolactam blocked isocyanate hardener (Evonik-Degussa).

The binder of Powder Example 3 consists of 50% weight of the polyester of Example 3 and 50 % weight of Araldite GT7004 (Huntsman)

The binder of Powder Example 4 consists of 60% weight of the polyester of Example 4 and 40 % weight of Araldite GT7004 (Huntsman)

The binder of Powder Example 5 consists of 70% weight of the polyester of Example 5 and 30 % weight of Araldite GT7004 (Huntsman)

The binder of Powder Example 6 consists of 93% weight of the polyester of Example 6 and 7 % weight of Araldite PT81 0 (Huntsman)

The binder of Powder Example 7 consists of 95% weight of the polyester of Example 7 and 5 % weight of Primid XL552 (EMS-Chemie)

The binder of Powder Example 8 consists of 91% weight of the polyester of Example 8 and 9 % weight of Araldite PT91 0 (Huntsman)

The powders are prepared first by dry blending of the different components and then by homogenisation in the melt using a PRISM 16 mm L/D 15/1 twin screw extruder at an extrusion temperature of 85°C. The extrudate is ground in a grinder of Alpine 100UPZ (from the company Alpine and subsequently sieved in order to obtain a size of the particles between 10 and 110 µm.

The powder thus prepared is deposited on cold rolled steel with a thickness of 0.8 mm, by electrostatic deposition using the GEMA - Volstatic PCG 1 spraygun at a voltage of 60 kV, in such a way that a film thickness of the cured coating of about 80 µm is obtained.

The panels comprising the Powder Examples 2 and 6 then are transferred to an air-ventilated oven, where curing proceeds for 15 minutes at a temperature of 200°C.

The panels comprising the Powder Examples 4, 5, 7 and 8 are transferred to an air-ventilated oven, where curing proceeds for 15 minutes at a temperature of 180°C.

The panel comprising the Powder Examples 3 is transferred to an air-ventilated oven, where curing proceeds for 15 minutes at a temperature of 160°C.

The coated panels, thus obtained, all prove a smooth aspect with a gloss 60° according to ASTM D523 of more than 90%, a chemical resistance, as measured by double MEK rubs, of more than 100 twofold rubbings (to and fro) and a flexibility, as measured by direct impact strength (DI) and the reverse impact strength (RI) according to ASTM D2794, of at least 160 kg.cm.

The coatings thus obtained all prove properties comparable to or even slightly better than the coatings obtained from equal polyesters, yet obtained accordingly a conventional process, where a TPA, AdA, NPG, HPN, TMP and possibly TMA hydroxyl functional prepolymer is further extended and condensed to a hydroxyl-functional polyester or extended and carboxylated with isophthalic acid and possibly adipic acid to a carboxyl-functional polyester.

The final polyesters, obtained accordingly the concept of the present invention, prove a final coloration, represented by the b-value, as measured by the Dr Lange Colorimeter, Microcolor II LMC6, which is considerable less compared to the equal polyesters obtained from a conventional process, especially when modifying polyols and/or polyacid are part of the recipe.

## Claims

1. A process for producing at least two different polyesters from a common prepolymer, comprising the steps of
(a) forming an amount of prepolymer by reacting a stoichiometric excess of at least one polyol monomer, wherein neopentyl glycol represents at least 80% wt of the total polyol monomer, in at least one reaction selected from the group consisting of (a1) an esterification reaction with at least one polyacid monomer, wherein terephthalic acid represents at least 80% wt of the total polyacid monomer and (a2) a transesterification reaction with at least one alkyl ester monomer of a polyacid, wherein di-alkyl terephthalate represents at least 80% wt of the total alkyl ester monomer,
(b) taking a portion of the prepolymer formed in step (a) to form a first polyester from said prepolymer and from one or more modifying polyacids and/or polyols, using a first recipe, and
(c) taking at least once a second portion of the prepolymer formed in step (a) to form a second polyester from said prepolymer and from one or more modifying polyacids and/or polyols, using a second recipe,
whereby the second recipe differs from the first recipe by the selection of at least one different modifying polyacid and/or polyol, and/or by using the same modifying polyacids and/or polyols in amounts which differ between the two recipes at least for 1% relative for at least one monomer.

2. The process according to claim 1 wherein the prepolymer is **characterized by** at least one of the following characteristics:
(i) a hydroxyl number in the range of 20 to 120 mg KOH/g,
(ii) an acid number which is at least 1 mg KOH/g below its hydroxyl number,
(iii) to the naked eye transparent, i.e. containing at most 3% by weight of unreacted terephthalic acid based on the total weight of the prepolymer,
(iv) containing at most 3% by weight of unreacted dialkyl terephthalate based on the total weight of the prepolymer,
(v) an average molecular weight, as determined by Gel Permeation Chromatography (GPC), in the range of 800 to 6000,
(vi) a glass transition temperature Tg measured by Differential Scanning Chromatography (DSC) using a temperature gradient of 20 degrees C per minute, in the range of 30-80°C,
(vii) a Brookfield cone-plate viscosity at 200°C in the range of 5-15000 mPa.s.

3. The process according to claim 1 or 2 wherein the prepolymer is linear.

4. The process according to any preceding claim wherein step (a) is performed in continuous mode.

5. The process according to any preceding claim wherein step (b) and/or step (c) is performed in batch mode.

6. The process according to any preceding claim wherein step (c) is performed subsequent to step (b) in the same process equipment.

7. The process according to any preceding claim wherein at least one of the first and the second polyester products is a hydroxyl functional polyester **characterized by** at least one of the following characteristics:
(i) a hydroxyl number in the range of 10 to 150 mg KOH/g,
(ii) an acid number which is at least 1 mg KOH/g below its hydroxyl number, preferably at most 10% of the hydroxyl number,
(iii) a number average molecular weight, as determined by Gel Permeation Chromatography (GPC), in the range of 1000-15000,
(iv) a glass transition temperature Tg measured by Differential Scanning Chromatography (DSC) with a temperature gradient of 20 degrees C per minute, in the range of 40-90°C,
(v) a Brookfield cone-plate viscosity at 200°C in the range of 5-15000 mPa.s.

8. The process according to any one of claims 1-6 wherein at least one of the first and the second polyester products is a carboxylic acid functional polyester **characterized by** at least one of the following characteristics:
(i) an acid number in the range of 10 to 150 mg KOH/g,
(ii) a hydroxyl number which is at least 1 mg KOH/g below its acid number, preferably at most 10% of the acid number,
(vi) a number average molecular weight, as determined by Gel Permeation Chromatography (GPC), in the range of 1000-15000,
(vii) a glass transition temperature Tg measured by Differential Scanning Chromatography (DSC) using a temperature gradient of 20 degrees C per minute, in the range of 40-90°C
(iii) a Brookfield cone-plate viscosity at 200°C in the range of 5-15000 mPa.s.

9. The process according to any preceding claim comprising the step of converting at least one of the first and the second polyester products into a (meth)acryloyl group containing polyester, by the reaction of a diisocyanate with a hydroxylalkyl(meth)acrylate and with the terminal hydroxyl groups of a hydroxyl-functional polyester, or through the reaction of a (meth)acrylic acid with the terminal hydroxyl groups of a hydroxyl-functional polyester, or through the reaction of glycidyl(meth)acrylate with the terminal carboxyl groups of a carboxyl functional polyester.

10. The process according to any preceding claim comprising the step of adding to at least one of the first and the second polyester products at least one compound selected from the list existing of an antioxidant, a tribo additive, a UV-stabiliser, a heat stabiliser, a flow agent, a dispersing agent, and mixtures thereof.

11. The process according to any preceding claim further comprising the step of further adding to at least one of the first and the second polyester products or its derivative a suitable curing component, optionally further including at least one filler material and/or a photo-initiator, to form a formulation suitable for a powder coating, including an ink.

12. The process according to claim 11 wherein the formulation is extruded into extrudates.

13. The process according to claim 12 wherein the extrudates are ground to a powder.

14. The process according to claim 13 further comprising the step of applying the powder to an article to form an article which is at least partially coated with the powder.

15. The process according to claim 14 further comprising the step of exposing the powder to at least one treatment selected from heating, electromagnetic radiation, preferably UV-radiation, and electron beam irradiation, to cure the powder.
